# EUROPÄISCHE PATENTSCHRIFT

(11) **EP 1 731 451 B1**
(45) Veröffentlichungstag und Bekanntmachung des Hinweises auf die Patenterteilung: **22.04.2009**
(21) Anmeldenummer: 06005810.4
(22) Anmeldetag: 22.03.2006
(51) Int. Cl.: B65G 27/30, B65G 27/08

(54) **Schwingsystem für einen Vibrations-Linearförderer zum Fördern eines Fördergutes und Vibrations-Linearförderer**
Oscillating system for a linear-vibratory conveyor for conveying a product and linear-vibratory conveyor
Système oscillant destiné à un convoyeur vibrant à déplacement linéaire pour transporter un produit et convoyeur vibrant à déplacement linéaire

(30) Priorität: 10.06.2005 DE 102005027122; 13.06.2005 DE 102005027309; 26.10.2005 DE 102005051239
(43) Veröffentlichungstag der Anmeldung: 13.12.2006
(73) Patentinhaber: Böhm, Karlheinz, 92521 Schwarzenfeld (DE); Jehl, Norbert, 92224 Amberg (DE)
(72) Erfinder: Krell, Helmut, (DE)
(74) Vertreter: Graf, Helmut

(56) Entgegenhaltungen:
- DE-A1- 3 231 947
- GB-A- 2 111 638

## Beschreibung

Die Erfindung bezieht sich auf ein Schwingsystem für einen Vibrations-Linearförderer gemäß Oberbegriff Patentanspruch 1 oder 6 sowie auf einen Vibrationsförderer gemäß Oberbegriff Patentanspruch 10.

Vibrations-Linearförderer arbeiten grundsätzlich nach dem Mikrowurf-Prinzip und sind in der Regel als elektromagnetisch erregte Feder-Massen-Schwingsysteme (auch Zwei-Massen-Schwingsysteme) aufgebaut, und zwar mit einer Nutzmasse und einer Gegenmasse, die bei aktiviertem Schwingsystem eine gegenläufige Schwing- bzw, Vibrationsbewegung ausführen. Das an dem Schwingsystem vorgesehene Förderelement (z. B. Förderschiene) ist Bestandteil der Nutzmasse, überträgt in Folge seiner Schwing- oder Vibrationsbewegung Schwingkräfte auf das zu fördernde Fördergut und bewirkt so das Fördern dieses Fördergutes entlang dem Förderelement.

Mit der gegensinnig zu der Nutzmasse sich bewegenden Gegenmasse wird angestrebt, Schwingkräfte an den Befestigungsmitteln, z.B. am Fuße des Linearförderers durch gegengerichtete Reaktionskräfte zu kompensieren und dadurch unerwünschte Vibrationen oder Erregungen im Bereich der Befestigungsmittel des Linearförderers und damit auch die Übertragung solcher Schwingkräfte auf die Montagefläche zu verhindern.

Neben Zwei-Massen-Schwingsystemen mit kleiner Nutzmasse und großer Gegenmasse sind auch Ausführungen bekannt, bei denen die Nutzmasse und die Gegenmasse sowie deren Schwingkräfte und Reaktionskräfte am Fuße des Linearförderers oder des Schwingsystems gleich groß sind, wobei es für eine optimale Vermeidung von Schwingkräften an den Befestigungsmitteln auch notwendig ist, dass die Massenschwerpunkte der Nutzmasse und der Gegenmasse sich auf der gleichen Wirklinie bewegen.

Ein Vibrations-Linearförderer mit einem eine Nutzmasse und eine Gegenmasse aufweisenden Schwingsystem ist beispielsweise aus der EP 0 529 185 B1 bekannt. Bei diesem bekannten Förderer ergeben sich aber durch die Nebeneinanderanordnung von Nutzmasse und Gegenmasse zusätzliche Drehmoment-Schwingungen, die insbesondere bei langen Förderelementen oder Förderschienen an deren Enden die Förderwirkung störende seitliche Schwingungen hervorrufen, die im Extremfall zu einem Stillstand der Förderwirkung führen können.

Aus der DE 36 42 183 A1 ist daher ein Zwei-Massen-Schwingsystem bekannt, bei dem die Massenschwerpunkte der Nutzmasse und der Gegenmasse in einer gemeinsamen, die Förderrichtung oder Längserstreckung des Förderelementes einschließenden vertikalen Ebene angeordnet sind. Hierdurch werden Seitenschwingungen vermieden. Weiterhin ist angestrebt, die Schwingkräfte, Schwingdrehmomente und insbesondere auch Kippmomente um horizontale Achsen senkrecht zur Förderrichtung auszugleichen, so dass weder der Fördervorgang gestört wird, noch Schwingungen oder Erregungen an den Befestigungsmitteln bzw. am Fuße des Linearförderers auftreten. Um dies zu erreichen, ist es allerdings erforderlich, die theoretischen Bedingungen für eine Kompensation bzw. für die Vermeidung von Schwingkräften, Schwingdrehmomenten und Kippmomenten exakt einzuhalten, und zwar insbesondere auch dahingehend, dass nicht nur beide Schwingsysteme dasselbe Schwingverhalten aufweisen, d. h. bei gleich großer Federkonstante auch die Nutz- und Gegenmassen gleich sind, sondern sich die Massenschwerpunkte der Nutzmasse und der Gegenmasse bei der Schwing- bzw. Vibrationsbewegung stets auf einer gemeinsamen Wirklinie bewegen, und zwar auf einer Wirklinie, die in einer Ebene senkrecht zu der Achse liegt, um die die Schwing- oder Vibrationsbewegung der jeweiligen Masse erfolgt.

Ist diese Massenschwerpunkt-Bedingung nicht eingehalten, so treten an dem Förderelement Restschwingungen auf, und zwar beispielsweise in Form von Kippschwingungen, die dann insbesondere bei langen Förderelementen an den beiden Enden dieser Elemente, d. h. am Einlauf und am Auslauf des Linearförderers zu Störungen führen, und zwar u.a. bezüglich der Übergabe des Fördergutes an die Förderschiene (am Einlauf) bzw. von der Förderschiene an eine nachfolgende Funktionseinheit (am Auslauf). Diese Restschwingungen sind dann abhängig von der Lage des tatsächlichen Masseschwerpunktes der Nutzmasse z.B. solche um horizontale und/oder vertikale Achsen quer zur Längserstreckung des Förderelementes.

In der Praxis ist es zwar möglich, durch entsprechendes Anbringen oder Entfernen von Gewichten oder Massen eine Anpassung der Nutzmasse und der Gegenmasse zu erreichen, und zwar auch dann, wenn ein vorhandenes Schwingungssystem mit unterschiedlichen Förderelementen verwendet wird oder ein vorhandenes Förderelement gegen ein anderes Förderelement ausgetauscht wird. In der Praxis ist es aber vielfach nicht oder allenfalls nur mit einem erheblichen Aufwand sowie mit erheblichen Einschränkungen der konstruktiven Freiheit möglich, die Bedingungen für die relative Lage der Massenschwerpunkte zueinander einzuhalten. Schwing-, Dreh- und/oder Kippmomente und damit verbundene Restschwingungen sind unter praktischen Gegebenheiten in der Regel nicht vermeidbar.

Bekannt ist auch ein Schwingförderer im Wesentlichen bestehend aus einem Schwingsystem und einer Förderschiene (DE 32 31 947 A). Die im Wesentlichen aus der Förderschiene und einem Magnetanker bestehende Nutzmasse ist über Blattfedern mit einem Lagerelement verbunden, an welchem auch der Elektromagnet mit Erregerwicklung des elektrischen Antriebs fest vorgesehen ist. Mit dem Lagerelement ist der Schwingförderer an einem Untergrund oder einer Montagefläche befestigt, und zwar unter Verwendung von elastischen Dämpfungselementen. Eine wirksame Dämpfung der Übertragung von Restschwingungen vom Schwingförderer auf einen Untergrund lässt sich mit dieser bekannten Ausbildung nicht erreichen, insbesondere auch nicht eine Dämpfung von Restschwingungen bei gleichzeitiger Vermeidung von Schwingungen und/oder Schwenkbewegungen der Förderschiene quer zur Förderrichtung bzw, um vertikale Achsen.

Bekannt ist weiterhin ein Zwei-Massen-Vibrationssystem (GB 2 111 638 A), im Wesentlichen bestehend aus einem ein Rüttelsieb aufweisenden Vorrichtungsteil, der über mehrere Druckfedern gefedert auf einem als Gegenmasse wirkenden Rahmen angeordnet und mit eine Vibrator versehen ist. Der als Gegenmasse wirkende Rahmen ist seinerseits über mehrere Druckfedern auf einem Untergrund abgestützt. Dieses bekannte Zwei-Massen-Vibrationssystem ist insbesondere für die Behandlung von Schüttgut in größere Mengen bestimmt. Eine an einem gemeinsamen Lagerelement federnd gelagerte Nutzmasse und Gegenmasse sind nicht vorgesehen.

Aufgabe der Erfindung ist es, ein Schwingsystem für einen Vibrations-Linearförderer aufzuzeigen, welches Restschwingungen und die damit verbundenen Nachteile vermeidet Zur Lösung dieser Aufgabe ist ein Schwingsystem entsprechend dem Patentanspruch 1 oder 6 ausgebildet. Ein Vibrations-Linearförderer ist Gegenstand des Patentanspruchs 10. Weiterbildungen der Erfindung sind Gegenstand der Unteransprüche.

Bei der Erfindung liegt ebenfalls ein Abgleich der Massen bzw. Massengewichte sowie der Federkonstanten der Nutzmasse und der Gegenmasse vor (Massen- und Federabgleich), und zwar in der Form, dass die Massengewichte und Federkonstanten gleich sind. Weiterhin sind die Befestigungsmitteln für das Schwingungssystem, die (Befestigungsmittel) zur Befestigung an einem Untergrund oder an einer Montagefläche dienen und die beispielsweise von einer Fuß- oder Basisplatte gebildet sind, nicht starr, sondern mit einer gewissen Elastizität ausgestattet, d.h. das Schwingsystem insgesamt mit einer gewissen Elastizität am Untergrund oder an der Montagefläche befestigt, die (Elastizität) Restschwingungen, insbesondere auch mikrofeine Restschwingungen, die bei Abweichungen von der Massenschwerpunkt-Bedingung auftreten, ausgleicht, trotzdem aber die erforderliche Stabilität am Ein- und Auslauf des Förderelementes für eine einwandfreie Übergabe des Fördergutes gewährleistet, d.h. die elastischen Befestigung an einem Untergrund oder an einer Montagefläche dient bei dem bestehenden Massen- und Federabgleich ausschließlich der Vermeidung von Restschwingungen.

Durch die erfindungsgemäße Ausbildung ist es u.a. möglich, für Wechsel-Förderelemente große Toleranzbereiche bei der Gestaltung und Fertigung der Förderelemente zuzulassen, deren Einsatz Grenzen in Bezug auf Länge, Gewicht, Lage des Schwerpunktes, Material usw. wesentlich zu erweitern, ohne dass der Fördervorgang störend beeinflusst wird.

Fördergut im Sinne der Erfindung sind insbesondere Bauteile, Werkstücke, aber auch pulverförmige oder granulatartige Stoffe. Die Erfindung wird im Folgenden anhand der Figuren an einem Ausführungsbeispiel näher erläutert. Es zeigen:
- Fig. 1: in vereinfachter Darstellung und in Seitenansicht einen Vibrations-Linearförderer gemäß der Erfindung;
- Fig. 2: in vereinfachter Darstellung einen Schnitt entsprechend der Linie I - I der Figur 1;
- Fig. 3: in vereinfachter Darstellung eine Draufsicht auf den Linearförderer der Figur 1;
- Fig. 4: in Einzeldarstellung eines der Blattfederelemente des Linearförderers der Figuren 1 - 3;
- Fig. 5: in einer Darstellung wie Figur 1 eine weitere Ausführungsform.

Der in den Figuren allgemein mit 1 bezeichnete Vibrations-Linearförderer dient beispielsweise zum Zuführen von in den Figuren schematisch mit 2 bezeichneten Bauteilen z.B. an eine nicht dargestellte Arbeitsstation und besteht im wesentlichen aus einem Schwingsystem 3, welches an einer bei der dargestellten Ausführungsform horizontalen Montagefläche 4, beispielsweise an einem Maschinentisch eines Montageautomaten befestigt ist, sowie aus einer an der Oberseite des Schwingsystems 3 befestigten Förderschiene 5. Diese ist im einfachsten Fall ein an der Oberseite offenes U-Profil aus einem geeigneten Material, beispielsweise aus Metall und bildet eine Förderstrecke, entlang der das Fördergut, z.B. die Bauteile 2 bei aktiviertem Schwingsystem 3 in Richtung des Pfeils A bewegt werden.

Im Detail besteht das Schwingsystem 3 aus einer unteren Fuß- oder Befestigungsplatte oder Basis 6, mit der das System an der Montagefläche 4 befestigt oder verankert ist. Über der Basis 6 ist ein unteres Lagerelement 7 vorgesehen, welches bei der dargestellten Ausführungsform über vier Feder- und Dämpfungselemente 8 im Abstand über der Basis 6 federnd an dieser gehalten ist. Die Dämpfungs- und Federelemente 8 sind jeweils klotzartig aus einem elastomeren Material gefertigt, beispielsweise aus elastomerem Kunststoff oder Gummi mit geringer Elastizität und größerer Härte. Bei der dargestellten Ausführungsform sind die Feder- und Dämpfungselemente 8 derart verteilt angeordnet, dass sie mit ihren vertikalen Achsen die Eckpunkte eines Rechtecks definieren, dessen Längserstreckung parallel oder annähernd parallel zur Längserstreckung der Förderschiene 5 liegt. Zur verbesserten Verankerung der Feder- und Dämpfungselemente 8 sowie zur Erzielung einer möglichst geringen Bauhöhe bei ausreichend größer Wirklänge der Feder- und Dämpfungselemente 8 sind diese jeweils an ihrem unteren Bereich in Ausnehmungen der Basis 6 aufgenommen. An der Oberseite sind die Feder- und Dämpfungselemente 8 in geeigneter Weise an der Unterseite des Lagerelementes 7 befestigt. In Draufsicht ist das Lagerelement 7 dabei im wesentlichen rechteckförmig ausgebildet und liegt mit seiner Längserstreckung ebenfalls parallel oder annähernd parallel zur Längserstreckung der Förderschiene 5.

An den beiden schrägen Schmalseiten 7.1 des Lagerelementes 7 ist jeweils ein Blattfederpaket 9 vorgesehen, welches aus wenigstens zwei Blattfederelementen 10 besteht, die ihrerseits aus Federstahl derart hergestellt sind, dass sie jeweils zwei außen liegende Blattfedern 10.1 und 10.2 sowie eine dazwischen liegende Blattfeder 10.3 bilden. Die Blattfederelemente 9 und damit die drei Blattfedern dieser Elemente sind unten mit dem Lagerelement 7 verbunden. Die oberen Enden der Blattfedern 10.1 und 10.2 sind jeweils mit einem oberen Schwinggehäuse oder Lagerelement 11 verbunden, an welchem auch die Förderschiene 5 sowie ein Elektromagnetanker 12 befestigt sind. Das Lagerelement 11, der Elektromagnetanker 12 sowie die Förderschiene 5 mit dem in dieser Schiene aufgenommenen Fördergut bilden die Nutzmasse, deren Massenschwerpunkt 13 in der die Längsachse der Förderschiene 5 einschließenden vertikalen Mittelebene M liegt.

An den oberen Enden der mittleren Blattfedern 10.3 ist ein Schwingrahmen 14 befestigt, der u.a. einen Elektromagnetkern 15 mit Magnetspule 16 trägt und der zusammen mit dem Magnetkern und der Magnetspule 16 die Gegenmasse bildet, deren Masseschwerpunkt 17 wiederum in der Ebene M liegt und die bei gleichen Federkonstanten gleich der Nutzmasse ist.

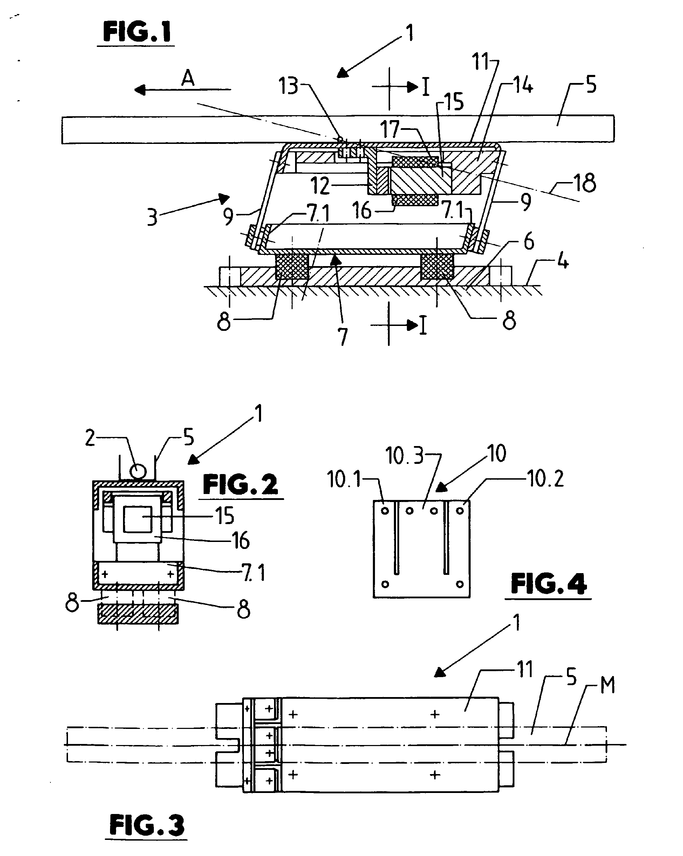

Beim Aktivieren des Schwingungssystems 3 wird der Förderschiene 5 eine VibrationsBewegung aufgeprägt, die eine parallel zur Förderschienenlängsrichtung verlaufende Komponente sowie eine hierzu senkrecht verlaufende Komponente aufweist, wobei beide Komponenten in der Mittelebene M liegen. Um durch die Gegenmasse einen optimalen Schwingungsausgleich zu erreichen, ist es zur Vermeidung von Kipp- oder Restschwingungen auch anzustreben, dass sich die Massenschwerpunkte 13 und 17 in einer gemeinsamen Ebene befinden, die parallel zu der von den Komponenten der Vibrationsbewegung definierten bzw. aufgespannten Ebene liegen und sich außerdem auf einer gemeinsamen Linie bewegen, wie dies in der Figur 1 mit der Linie 18 angedeutet ist.

U.a. dann, wenn die vorhandene Förderschiene 5 gegen eine andere Förderschiene ausgetauscht wird, oder aber dann, wenn das Schwingsystem 3 für unterschiedliche Förderschienen 5 verwendet wird, lässt sich zwar der Massenausgleich durch das Anbringen zusätzlicher Massen an die Gegenmasse oder durch das Entfernen von Massengewichten von der Gegenmasse erreichen, und zwar bei gleichen Federkonstanten für die Blattfedern für die Nutz- und Gegenmasse, das Einhalten der Massenschwerpunkt-Bedingung für Massenschwerpunkte 13 und 17 ist jedoch in der Regel nicht oder nur mit einem verhältnismäßig großen Aufwand möglich und schränkt darüber hinaus auch die Gestaltungsfreiheit für die Förderschiene 5 stark ein.

Bei dem Vibrationsförderer 1 ist dieser Nachteil durch die Dämpfungs- und Federelemente 8 vermieden. Es hat sich nämlich in überraschender Weise gezeigt, dass selbst bei einer nicht unerheblichen Abweichung beispielsweise des Massenschwerpunktes 13 der Nutzmasse von der durch die Massenschwerpunkt-Bedingung vorgegebenen Lage z.B. bei einem Austausch der Förderschiene 5 auch bei Förderschienen mit großer Länge keine Mikro- oder Restschwingungen an den Enden der Förderschiene auftreten, die Bauelemente 2 also störungsfrei an den Enden der Förderschiene von dieser aufgenommen bzw. an eine sich an den Vibrationsförderer 1 anschließende Einrichtung (z. B. Werkzeug usw.) weiter gegeben werden.

Die erfindungsgemäße Ausbildung ermöglicht somit nicht nur die Montage und das Austauschen von Förderschienen 5 an dem Schwingsystem 3 ohne großen Justier- und Zeitaufwand, sondern stellt vor allem auch sicher, dass das Fördern und die Übergabe der Bauelemente 5 insbesondere an den Enden der Förderschiene beeinträchtigende Restschwingungen vermieden sind.

Weiterhin ist durch die erfindungsgemäße Ausbildung auch vermieden, dass eventuelle Restschwingungen über die Basis 6 auf die Montagefläche 4 übertragen werden, die dem Vibrationsförderer 1 in benachbarte Funktionselemente beispielsweise einer Montage- oder Fertigungsstrecke beeinträchtigen könnten. Durch den erfindungsgemäßen Aufbau ist ein ruhiger Betrieb des Vibrationsförderers 1 erzielt. Die Härte der Feder- oder Dämpfungselemente 8 bzw. des für diese Elemente verwendeten Materials ist dabei so gewählt, dass die Förderschiene eine stabile Lage aufweist, dennoch die trotz des Massen- und Federabgleichs auftretenden Rest- oder Mikroschwingungen insbesondere auch an der Förderschiene 5 vermieden sind. Feder- oder Dämpfungselemente 8 sind hierfür z.B. Füßchen mit einer Shore-Härte zwischen etwa 55 und 70.

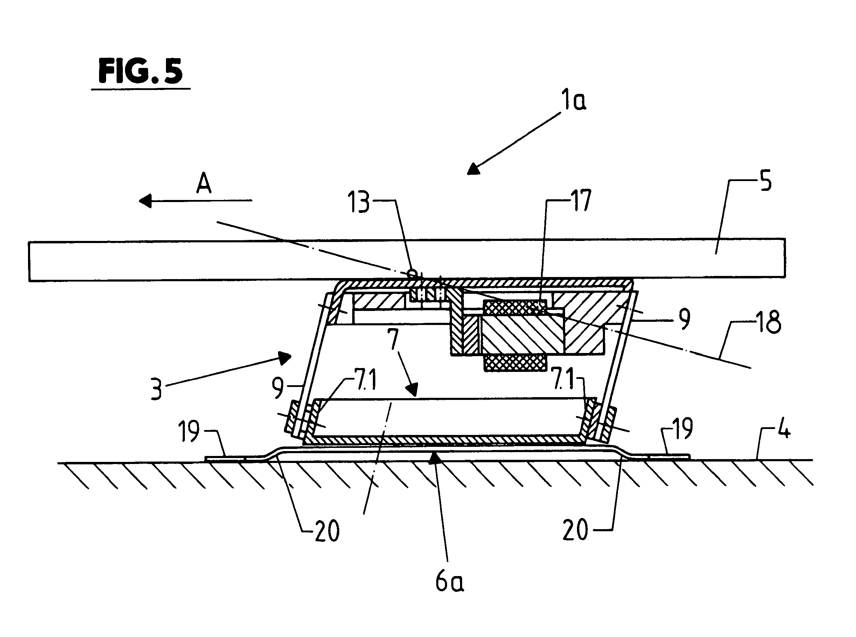

Die Figur 5 zeigt als weitere Ausführungsform einen Vibrationsförderer 1 a, der sich vom Vibrationsförderer 1 im wesentlichen nur dadurch unterscheidet, dass zur Vermeidung von Mikroschwingungen an der Förderschiene 1 sowie zur Vermeidung der Übertragung von Restschwingungen auf die Montagefläche 4 anstelle der Basis 6 eine Basis 6a verwendet ist, die Federeigenschaften aufweist, dennoch konstruktiv ausreichend stabil ausgebildet ist, so dass die erforderliche Stabilität der Übergänge am Ein- und Auslauf des Vibrationsförderers 1a bzw. der Förderschiene gewährleistet ist.

Die Basis 6a ist bei der dargestellten Ausführungsform aus einem geeigneten Flachmaterial, beispielsweise aus einem Blech aus Federstahl gefertigt, und zwar derart, dass sie über die beiden Schmalseiten des unteren, unmittelbar an der Basis befestigten Lagerelementes 7 wegstehende laschenartige Fußelemente 19 aufweist, die durch mehrfaches bzw. zick-zack-förmiges Abwinkeln des Blechmaterials der Basis 6a gebildet sind. Bei an der Montagefläche 4 befestigten Fußelementen 19 ist die Basis 6a in ihrem mittleren, mit dem Lagerelement 7 verbundenen Bereich von der Montagefläche 4 beabstandet und die jeweiligen Übergänge 20 zu den Fußelementen 19 wirken federnd oder als Feder- und Dämpfungselemente.

Die Erfindung wurde voranstehend an Ausführungsbeispielen beschrieben. Es versteht sich, dass zahlreiche Änderungen sowie Abwandlungen möglich sind, ohne dass dadurch der der Erfindung tragende Gedanke verlassen wird. Insbesondere ist die Erfindung nicht auf das spezielle Schwingsystem 3 beschränkt, d. h. auch andere Ausbildungen des Schwingsystems mit Nutzmasse und Gegenmasse sind möglich.

### Bezugszeichenliste

- 1, 1a: Vibrationsförderer
- 2: Bauteil
- 3: Schwingsystem
- 4: Montagefläche
- 5: Förderschiene
- 6, 6a: Basis
- 7: unteres Lagerelement
- 7.1: Lagerelement-Schmalseite
- 8: Feder- und Dämpfungselement
- 9: Blattfederpaket
- 10: Blattfederelement
- 10.1, 10.2, 10.3: Blattfeder
- 11: oberes Lagerelement
- 12: Elektromagnetanker
- 13: Masseschwerpunkt der Nutzmasse
- 14: Schwingrahmen
- 15: E lektromagnetkern
- 16: Magnetspule
- 17: Masseschwerpunkt der Gegenmasse
- 18: Linie
- 19: Fußelement
- 20: Übergang

- A: Förderrichtung
- M: Mittelebene

## Patentansprüche

1. Schwingsystem für einen Vibrations-Linearförderer zum Fördern eines Förderguts, mit einer Nutzmasse , die zumindest ein Förderelement (5) für das Fördergut aufweist und für eine Schwenk- oder Vibrationsbewegung an einem Lagerelement (7) gefedert gelagert ist und, mit einer Gegenmasse, die für eine gegenläufige Schwenk- oder Vibrationsbewegung an einem Lagerelement (7) gefedert gelagert ist, mit einem elektrischen Antrieb zur Erzeugung einer gegenläufigen Schwing- oder Vibrationsbewegung, sowie mit Feder- und Dämpfungselemente (8) aufweisenden Befestigungsmitteln (6, 8) zum Befestigen des Schwingsystems an einem Untergrund oder an einer Montagefläche (4), **dadurch gekennzeichnet,**
**dass** die Befestigungsmittel von einer zusätzlichen Fuß- oder Befestigungsplatte (6) zur Befestigung an dem Untergrund oder der Montagefläche (4) und von vier Feder- oder Dämpfungselementen (8) gebildet sind, die zwischen dem Lagerelement (7) und der von diesem durch die Feder- und
Dämpfungselemente (8) beabstandeten Fuß- oder Befestigungsplatte (6) vorgesehen sind, und
**dass** die Feder- und Dämpfungselemente (8) derart verteilt angeordnet, dass sie Eckpunkte eines Rechtecks definieren, welches mit seiner Längserstreckung in Richtung der Schwenk- oder Vibrationsbewegung orientiert ist.

2. Schwingsystem nach Anspruch 1, **dadurch gekennzeichnet,**
**dass** die Feder- oder Dämpfungselemente (8) füßchenartig aus einem elastomeren Material gefertigt sind.

3. Schwingsystem nach Anspruch 2, **dadurch gekennzeichnet, dass** die Feder- oder Dämpfungselemente (8) aus einem elastomeren Kunststoff oder aus Gummi oder Kautschuk bestehen.

4. Schwingsystem nach einem der vorhergehenden Ansprüche, **dadurch gekennzeichnet, dass** die Masse bzw. das Massengewicht sowie die Federkonstanten der der gefederten Lagerung für die Nutzmasse und die Gegenmasse gleich sind.

5. Schwingsystem nach einem der vorhergehenden Ansprüche, **dadurch gekennzeichnet, dass** die Feder- und Dämpfungselemente (8) eine Shore-Härte im Bereich zwischen 55 und 70 aufweisen.

6. Schwingsystem für einen Vibrations-Linearförderer zum Fördern eines Fördergutes, mit einer Nutzmasse , die zumindest ein Förderelement (5) für das Fördergut aufweist und für eine Schwenk- oder Vibrationsbewegung an einem Lagerelement (7) gefedert gelagert ist und, mit einer Gegenmasse die für eine gegenläufige Schwenk- oder Vibrationsbewegung an einem Lagerelement (7) gefedert gelagert ist, mit einem elektrischen Antrieb zur Erzeugung einer gegenläufigen Schwing- oder Vibrationsbewegung, sowie mit federnden Befestigungsmitteln (6a) zum Befestigen des Schwingsystems an einem Untergrund oder an einer Montagefläche (4), **dadurch gekennzeichnet,**
**dass** die Befestigungsmittel von einem Fußteil (6a) oder eines Basis gebildet sind, und dass die Basis (6a) als Feder- und Dämpfungselement ausgeführt ist und hierfür wenigstens einen Befestigungsabschnitt (19) zum Befestigen an dem Untergrund oder an der Montagefläche (4) aufweist und zwischen diesem Befestigungsabschnitt (19) und dem Lagerelement (7) zumindest einen federnden Abschnitt oder Übergang (20) bildet.

7. Schwingsystem nach Anspruch 6, **dadurch gekennzeichnet, dass** die Basis (6a) aus einem federnden Material, vorzugsweise aus Federstahl besteht.

8. Schwingsystem nach einem der vorhergehenden Ansprüche, **dadurch gekennzeichnet, dass** das Förderelement (5) austauschbar am Schwingsystem (3) oder an einem der Nutzmasse zugeordneten weiteren Lagerelement (11) des Schwingsystems (3) vorgesehen ist.

9. Schwingsystem nach einem der vorhergehenden Ansprüche, **dadurch gekennzeichnet, dass** das Förderelement eine Förderschiene (5) ist.

10. Vibrations-Linearförderer zum Fördern eines Fördergutes mit einem Schwingsystem (3), welches jeweils für eine Schwenk- oder Vibrationsbewegung gefedert gelagert eine zumindest ein Förderelement (5) für das Fördergut aufweisende Nutzmasse sowie eine Gegenmasse und einen elektrischen Antrieb zur Erzeugung einer gegenläufigen Schwing- oder Vibrationsbewegung aufweist und welches mit Befestigungsmitteln (6, 8; 6a) an einem Untergrund oder an einer Montagefläche (4) befestigbar ist, **dadurch gekennzeichnet, dass** Schwingsystem (3) nach einem der vorhergehenden Ansprüche ausgebildet ist.

## Claims

1. Vibration system for a linear vibratory conveyor for conveying goods, with a payload which comprises at least one conveyor element (5) for the goods and which is mounted resiliently on a bearing element (7) for swivel or vibratory movement, and with a counter mass which is mounted resiliently on a bearing element (7) for the counter swivel or vibratory movement, with an electrical drive for generating a counter swing or vibratory movement, as well as with fixing means (6, 8) having spring and damping elements (8) for fixing the vibration system on a foundation or on an assembly surface (4) **characterised in that**
the fixing means are formed by an additional foot or fixing plate (6) for fixing onto the foundation or assembly surface (4) and by four spring or damping elements (8) which are provided between the bearing element (7) and the foot or fixing plate (6) which is spaced from the bearing element (7) by the spring and damping elements (8), and
that the spring and damping elements (8) are arranged spread out so that they define corner points of a rectangle which is aligned with its longitudinal extension in the direction of the swivel or vibratory movement.

2. Vibration system according to claim 1 **characterised in that** the spring or damping elements (8) are made as small feet from an elastomer material.

3. Vibration system according to claim 2 **characterised in that** the spring or damping elements (8) consist of an elastomer plastics or rubber or caoutchouc.

4. Vibration system according to one of the preceding claims **characterised in that** the mass or mass weight as well as the spring constants of the resilient bearing for the payload and the counter mass are the same.

5. Vibration system according to one of the preceding claims **characterised in that** the spring and damping elements (8) have a Shore Hardness in the region of between 55 and 70.

6. Vibration system for a linear vibratory conveyor for conveying goods, with a payload which comprises at least a conveyor element (5) for the goods and is mounted resiliently on a bearing element (7) for a swivel or vibratory movement, and with a counter mass which is mounted resiliently on a bearing element (7) for a counter swivel or vibratory movement, with an electrical drive for generating a counter swing or vibratory movement, as well as with resilient fixing means (6a) for fixing the vibration system onto a foundation or an assembly surface (4) **characterised in that**
the fixing means are formed by a foot part (6a) or a base and that the base (6a) is designed as a spring and damping element and has for this at least one fixing section (19) for fixing on the foundation or on the assembly surface (4) and forms between this fixing section (19) and the bearing element (7) at least one resilient section or transition (20).

7. Vibration system according to claim 6, **characterised in that** the base (6a) consists of a resilient material, preferably spring steel.

8. Vibration system according to one of the preceding claims **characterised in that** the conveyor element (5) is provided interchangeable on the vibration system (3) or on a further bearing element (11) of the vibration system (3) assigned to the payload.

9. Vibration system according to one of the preceding claims **characterised in that** the conveyor element is a conveyor rail (5).

10. Linear vibratory conveyor for conveying goods with a vibration system (3) which resiliently mounted for each swivel or vibratory movement has a payload having at least one conveyor element (5) for the goods as well as a counter mass and an electrical drive for generating a counter swing or vibration movement and which is fixable by fixing means (6, 8; 6a) on a foundation or on an assembly surface (4) **characterised in that** the vibration system (3) is designed according to one of the preceding claims.

## Revendications

1. Système oscillant destiné à un convoyeur linéaire à vibrations pour le convoyage d'un produit à convoyer, avec un volume utile, qui présente au moins un élément convoyeur (5) pour le produit à convoyer et est logé sur ressorts sur un organe d'appui (7) dans un but de mouvement oscillant ou vibratoire et, avec un contrepoids logé sur ressorts sur un organe d'appui (7) pour un mouvement contraire d'oscillation ou de vibration, avec entraînement électrique pour la production d'un mouvement contraire d'oscillation ou de vibrations ainsi qu'avec des moyens de fixation (6, 8) présentant des éléments d'élasticité et d'amortissement (8) pour la fixation du système oscillant sur un sol sous-jacent ou sur une aire de montage (4), **caractérisé en ce que**
les moyens de fixation sont formés d'une plaque d'assise ou de fixation (6) supplémentaire pour la fixation sur le sol sous-jacent ou l'aire de montage (4) et de quatre éléments d'élasticité ou d'amortissement (8), prévus entre l'organe d'appui (7) et la plaque d'assise ou de fixation (6) éloignée de celui-ci par les éléments d'élasticité et d'amortissement (8), et
**en ce que** les éléments d'élasticité et d'amortissement (8) sont répartis de telle façon qu'ils définissent les sommets d'un rectangle, lequel est orienté avec son élongation longitudinale dans le sens du mouvement d'oscillation ou de vibration.

2. Système oscillant selon la revendication 1, **caractérisé en ce que** les éléments d'élasticité ou d'amortissement (8) sont fabriqués à la façon d'un empattement en matériau élastomère.

3. Système oscillant selon la revendication 2, **caractérisé en ce que** les éléments d'élasticité ou d'amortissement (8) sont constitués en matière synthétique élastomère ou en gomme ou caoutchouc.

4. Système oscillant selon l'une des revendications précédentes, **caractérisé en ce que** la masse ou, selon le cas, le poids massique ainsi que les constantes d'élasticité de l'appui sur ressorts pour le volume utile et le contrepoids sont égaux.

5. Système oscillant selon l'une des revendications précédentes, **caractérisé en ce que** les éléments d'élasticité et d'amortissement (8) présentent une dureté Shore comprise dans l'intervalle entre 55 et 70.

6. Système oscillant destiné à un convoyeur linéaire à vibrations pour le convoyage d'un produit à convoyer, avec un volume utile, qui présente au moins un élément convoyeur (5) pour le produit à convoyer et est logé sur ressorts sur un organe d'appui (7) dans un but de mouvement oscillant ou vibratoire et, avec un contrepoids logé sur ressorts sur un organe d'appui (7) pour un mouvement contraire d'oscillation ou de vibration, avec entraînement électrique pour la production d'un mouvement contraire d'oscillation ou de vibrations ainsi qu'avec des moyens de fixation élastiques (6a) pour la fixation du système oscillant sur un sol sous-jacent ou sur une aire de montage (4), **caractérisé en ce que** les moyens de fixation sont formés d'un empattement (6a) ou d'une base et **en ce que** la base (6a) est configurée comme un élément d'élasticité et d'amortissement et présente à cet effet au moins une section de fixation (19) pour la fixation sur le sol sous-jacent ou sur l'aire de montage (4) et forme entre cette section de fixation (19) et l'organe d'appui (7) au moins une section élastique ou raccord (20).

7. Système oscillant selon la revendication 6, **caractérisé en ce que** la base (6a) est constituée d'un matériau élastique, de préférence d'acier à ressort.

8. Système oscillant selon l'une des revendications précédentes, **caractérisé en ce que** l'élément convoyeur (5) est prévu remplaçable sur le système oscillant (3) ou sur un autre organe d'appui (11) du système oscillant (3) associé au volume utile.

9. Système oscillant selon l'une des revendications précédentes, **caractérisé en ce que** l'élément convoyeur est un rail de guidage (5).

10. Convoyeur linéaire à vibrations pour le convoyage d'un produit à convoyer, avec système oscillant (3), lequel présente, logé sur ressorts dans un but de mouvement oscillant ou vibratoire, au moins un volume utile présentant un élément convoyeur (5) pour le produit à convoyer, ainsi qu'un contrepoids et un entraînement électrique pour la production d'un mouvement contraire oscillant ou vibratoire et lequel peut être fixé avec des moyens de fixation (6, 8; 6a) sur un sol sous-jacent ou sur une aire de montage (4), **caractérisé en ce que** le système oscillant (3) est configuré selon l'une des revendications précédentes.
